(19) **Europäisches Patentamt**

**European Patent Office**

**Office européen des brevets**

(11) Veröffentlichungsnummer: **0 259 757**
**A2**

(12) # EUROPÄISCHE PATENTANMELDUNG

(21) Anmeldenummer: **87112728.8**

(22) Anmeldetag: **01.09.87**

(51) Int. Cl.⁴: **C08K 5/00** , **C08L 83/04**

(30) Priorität: **02.09.86 DE 3629762**

(43) Veröffentlichungstag der Anmeldung:
**16.03.88 Patentblatt 88/11**

(84) Benannte Vertragsstaaten:
**CH DE FR GB IT LI SE**

(71) Anmelder: **WACKER-CHEMIE GMBH**
**Prinzregentenstrasse 22**
**D-8000 München 22(DE)**

(72) Erfinder: **Wolfer, Dietrich, Dr., Dipl.-Chem.**
**Untereching 88**
**A-5110 Oberndorf/Salzburg(AT)**

(54) **Pigmentierte, zu Organopolysiloxanelastomeren vernetzbare Massen.**

(57) Zu Organopolysiloxanelastomeren vernetzbare Massen, die als mindestens einen Teil der roten bzw. orangefarbenen Pigmente rote bzw. orangefarbene Perylen-oder Perinon-Pigmente oder Gemische aus mindestens zwei derariger Pigmente enthalten.

EP 0 259 757 A2

## Pigmentierte, zu Organopolysiloxanelastomeren vernetzbare Massen

Pigmentierte, zu Organopolysiloxanelastomeren vernetzbare Massen sind bereits seit längerer Zeit bekannt. Hierzu wird z.B. auf W. Noll "Chemistry and Technology of Silicones" Academic Press, Inc., Orlando, San Diego, New York u.s.w., 1968, Seite 400 bis 403, verwiesen.

Es bestand nun die Aufgabe, Pigmente für zu Organopolysiloxanelastomeren vernetzbare Massen zu finden, die rot oder orangefarben, lichtecht und jedenfalls in Organopolysiloxanelastomeren bei Temperaturen bis zu mindestens 250°C ausreichend lange beständig, jedoch als weniger die Umwelt belastend als Cadmiumverbindungen betrachtet werden, Katalysatoren für eine Vernetzung der Massen durch Anlagerung von Si-gebundenem Wasserstoff an aliphatische Kohlenstoff-Kohlenstoff-Mehrfachbindung, insbesondere Katalysatoren auf Grundlage von Platin, bei den für eine derartige Vernetzung angewendeten Temperaturen nicht inhibieren, die Wirksamkeit von als flammabweisend machendes Mittel eingesetztem Platin oder für den gleichen Zweck eingesetzter Platinverbindung oder für den gleichen Zweck eingesetztem Platinkomplex nicht beeinträchtigen, bereits in verhältnismäßig geringen Mengen eine ausreichende Pigmentierung der Organopolysiloxanelastomeren ergeben und die Wärmebeständigkeit der physikalischen Festigkeitseigenschaften der pigmentierten Organopolysiloxanelastomeren zumindest nicht beeinträchtigen. Diese Aufgabe wird durch die Erfindung gelöst.

Gegenstand der Erfindung sind pigmentierte, zu Organopolysiloxanelastomeren vernetzbare Massen, dadurch gekennzeichnet, daß sie als mindestens einen Teil der roten bzw. orangefarbenen Pigmente rote, bzw. orangefarbene Perylen-oder Perinon-Pigmente oder Gemische aus mindestens zwei derartiger Pigmente enthalten.

Perylen-und Perinon-Pigmente sind z.B. in Kirk-Othmer "Encyklopädia of Chemical Technology", 3. Auflage, Band 17, John Wiley & Sons, New York, Chichester u.s.w., 1982, Seite 861 und 862 beschrieben.

Wichtige einzelne Beispiele für rote Perylenpigmente sind "Ferro Pigment 47/2042/654 rot" (wobei es sich bei dem Begriff "Ferro" um ein Registriertes Warenzeichen handeln dürfte) der Firma Ferro (Holland) B.V. Rotterdam-7 P.O.B. 6088, van Helmontstraat 20 und "Paliogen Rot K 3580" (wobei es sich bei dem Begriff "Paliogen" um ein Registriertes Warenzeichen handelt), Colour Index, Teil 1: Pigment Red 149, Teil 2: 71 137 der Firma BASF, D-6700 Ludwigshafen.

Ein wichtiges einzelnes Beispiel für ein orangefarbenes Perinon-Pigment ist "Ferro Pigment 47/7040/654 orange, Colour Index, Teil 1: Pigment Orange 43, Teil 2: 71 105, ebenfalls erhältlich bei der Firma Ferro (Holland) B.V. (vgl. oben).

Die hohe Temperaturbeständigkeit dieser organischen Pigmente in Organopolysiloxanelastomeren ist überraschend, weil z.B. in dem Merkblatt BASF "Technische Information, COLOR, Paliogen® Pigmente für Kunststoffe" vom November 1984 für Paliogen Rot K 3580 angegeben ist, daß bei einer Verweilzeit von 5 Minuten die Temperatur höchstens 300°C betragen darf, wenn dieses Pigment sich nicht verfärben soll und sich in Polyethylen mit hoher Dichte befindet.

Vorzugsweise werden die erfindungsgemäß verwendeten Pigmente in Form von Gemischen mit durch Trimethylsiloxygruppen endblockiertem Diorganopolysiloxan, worin die an jedes Siliciumatom gebundenen organischen Reste Kohlenwasserstoffreste sind, wie einem durch Trimethylsiloxygruppen endblockiertem Diorganopolysiloxan aus 99,93 Molprozent Dimethylsiloxaneinheiten und 0,07 Molprozent Vinylmethysiloxaneinheiten mit einer Viskosität von $8.10^6$ mPa.s bei 23°C, mit den übrigen Bestandteilen der zu Organopolysiloxanelastomeren vernetzbaren Massen vermischt. Vorzugsweise beträgt der Anteil von Pigment in diesen Gemischen 10 bis 50 Gewichtsprozent, bezogen auf das Gesamtgewicht der jeweiligen Mischung aus Pigment und Diorganopolysiloxan.

Vorzugsweise enthalten die erfindungsgemäßen zu Organopolysiloxanelastomeren vernetzbaren Massen 0,05 bis 0,5 Gewichtsprozent erfindungsgemäß verwendetes Pigment, bezogen auf das Gesamtgewicht der jeweiligen Masse.

Abgesehen von dem Gehalt an erfindungsgemäß verwendetem Pigment können die erfindungsgemäßen zu Organopolysiloxanelastomeren vernetzbaren Massen die gleichen Bestandteile enthalten, die auch in zu Organopolysiloxanelastomeren vernetzbaren Massen, die kein erfindungsgemäß verwendetes Pigment enthalten, vorliegen können. Diese Bestandteile und ihre Mengenverhältnisse sind schon so oft in Druckschriften beschrieben worden, daß sie hier nicht mehr beschrieben werden müssen.

Die Vernetzung der erfindungsgemäßen zu Organopolysiloxanelastomeren vernetzbaren Massen kann in beliebiger, vielfach bekannter Weise erfolgen.

Die Vernetzung der erfindungsgemäßen zu Organopolysiloxanelastomeren vernetzbaren Massen kann z.B. durch freie Radikale bildende Mittel in bekannter Weise erfolgen. Beispiele für derartige Mittel sind peroxydische Verbindungen, wie Acylperoxyde, z.B. Dibenzoylperoxyd, Bis-(4-chlorbenzoyl)-peroxyd und Bis-(2,4-dichlorbenzoyl)-peroxyd; Alkylperoxyde und Arylperoxyde, wie Di-tert.-butylperoxyd und Dicumylperoxyd; Perketale, wie 2,5-Bis-(tert.-butylperoxy)-2,5-dimethylhexan; Perester, wie Diacetylperoxy-dicarbonat, tert.-Butylperbenzoat und tert.-Butylperisononanoat; tert.-Butyl-beta-hydroxyethylperoxyd; und als freie Radikale bildende Mittel bekannte Azoverbindungen, wie Azoisobuttersäurenitril.

Ebenso kann die Vernetzung der erfindungsgemäßen zu Organopolysiloxanelastomeren vernetzbaren Massen z.B. durch Hochenergiestrahlen, wie alpha-, beta-oder gamma-Strahlen, in bekannter Weise erfolgen.

Ebenso kann die Vernetzung der erfindungsgemäßen zu Organopolysiloxanelastomeren vernetzbaren Massen z.B. durch Anlagerung von Si-gebundenem Wasserstoff an aliphatische Kohlenstoff-Kohlenstoff-Mehrfachbindungen in bekannter Weise erfolgen, wobei die Massen in sogenannten "Einkomponenten-Systemen" oder sogenannten "Zweikomponenten-Systemen" vorliegen können.

Ebenso kann die Vernetzung der erfindungsgemäßen zu Organopolysiloxanelastomeren vernetzbaren Massen z.B. durch Kondensation in bekannter Weise erfolgen, wobei auch hier die Massen in sogenannten "Einkomponenten-Systemen" oder sogenannten "Zweikomponenten-Systemen" vorliegen können.

Die erfindungsgemäßen, pigmentieren, zu Organopolysiloxanelastomeren vernetzbaren Massen können für alle Zwecke verwendet werden, für die pigmentierte, zu Organopolysiloxanelastomeren vernetzbare Massen verwendet werden können, beispielsweise zur Herstellung von isolierten elektrischen Leitern.

In den folgenden Beispielen beziehen sich alle Angaben von Teilen auf das Gewicht.

## Beispiel 1

100 Teile eines durch Trimethylsiloxygruppen endblockierten Diorganopolysiloxans aus 99,93 Molprozent Dimethylsiloxaneinheiten und 0,07 Molprozent Vinylmethylsiloxaneinheiten mit einer Viskosität von $8.10^6$ mPa.s bei 23°C werden in einem bei 150°C betriebenen Kneter zunächst mit 50 Teilen pyrogen in der Gasphase erzeugten Siliciumdioxyds mit einer BET-Oberfläche von 200 m$^2$/g, dann mit 1 Teil eines durch Trimethylsiloxygruppen endblockierten Dimethylpolysiloxans mit einer Viskosität von 96 mPa.s bei 23°C, dann mit 7 Teilen eines in den endständigen Einheiten je eine Si-gebundene Hydroxylgruppe aufweisenden Dimethylpolysiloxans mit einer Viskosität von 40 mPa.s bei 23°C und schließlich erneut mit 1 Teil des durch Trimethylsiloxygruppen endblockierten Dimethylpolysiloxans mit einer Viskosität von 96 mPa.s bei 23°C vermsicht. Das so erhaltene Gemisch wird nach Abkühlen auf Raumtemperatur auf einem bei Raumtemperatur betriebenen Walzwerk gleichzeitig mit 2,8 Teilen eines Gemisches aus gleichen Teilen Bis-(2,4-dichlorbenzoyl)-peroxyd und eines durch Trimethylsiloxygruppen endblockierten Dimethylpolysiloxans mit einer Viskosität von 250 mPa.s bei 23°C und 1,6 Teilen eines Gemisches aus 1 Teil Perylenrot (Colour Index, Teil 1: Pigment Red 149, Teil 2: 71 137) und 4 Teilen des durch Trimethylsiloxygruppen endblockierten Diorganopolysiloxans aus 99,93 Molprozent Dimethylsiloxaneinheiten und 0,07 Molprozent Vinylmethylsiloxaneinheiten mit einer Viskosität von $8.10^6$ mPa.s bei 23°C vermischt.

Die so erhaltene, pigmentierte, zu einem Organopolysiloxan vernetzbare Masse wird in einen Extruder mit einer Schnecke, deren Länge 450 mm und deren Durchmesser 45 mm beträgt, und Querspritzkopf eingeführt.

Die Schnecke in dem Extruder wird mit 13 Umdrehungen je Minute betrieben. In dem Extruder wird ein elektrischer Leiter (Kupfer-Litze, wobei die Summe der Querschnitte der Drähte, welche die Litze bilden, eine Fläche von 1,5 mm$^2$ hat) isoliert. Die Dicke der unvernetzten Isolierung beträgt 0,6 mm. Die Temperatur im durch Infrarot -Strahlen betriebenen Heizkanal beträgt 350°C. Die Verweilzeit des mit Organopolysiloxan umhüllten elektrischen Leiters in diesem Heizkanal beträgt 20 Sekunden.

Nach 1 Woche Erwärmen einer Probe des isolierten Leiters auf 250°C ist keine Verfärbung der Isolierung zu beobachten und die Bruchdehnungs-Abnahme 15 % weniger als bei einem Organopolysiloxanelastomer ohne Zusatz des Pigments, aber sonst gleicher Zusammensetzung.

## Beispiel 2

Die in Beispiel 1 beschriebene Arbeitsweise wird wiederholt mit der Abänderung, daß anstelle der 1,6 Teile des Gemisches aus 1 Teil Perylenrot und 4 Teilen des Diorganopolysiloxans 1,6 Teile eines Gemisches aus 1 Teil Perinonorange (Colour Index, Teil 1: Pigment Orange 43, Teil 2: 71 105) verwendet werden.

Nach 1 Woche Erwärmen des isolierten Leiters auf 250°C ist keine Verfärbung der Isolierung zu beobachten und die Bruchdehnungsabnahme über 15 % weniger als bei einem Organopolysiloxanelastomer ohne Zusatz des Pigments, aber sonst gleicher Zusammensetzung.

## Ansprüche

1. Pigmentierte, zu Organopolysiloxanelastomeren vernetzbare Massen, dadurch gekennzeichnet, daß sie als mindestens ein Teil der roten bzw. orangefarbenen Pigmente rote bzw. orangefarbene Perylen-oder Perinon-Pigmente oder Gemische aus mindestens zwei derartiger Pigmente enthalten.

2. Verfahren zur Herstellung der Massen nach Anspruch 1, dadurch gekennzeichnet, daß Gemische aus rotem bzw. orangefarbenem Perylen-oder Perinon-Pigment oder Gemische aus mindestens zwei derartiger Pigmente und durch Trimethylsiloxygruppen endblockiertem Diorganopolysiloxan, worin die an jedes Siliciumatom gebundenen organischen Reste Kohlenwasserstoffreste sind, mit den übrigen Bestandteilen der zu Elastomeren vernetzbaren Massen vermischt werden.